# EUROPÄISCHE PATENTANMELDUNG

(11) **EP 4 155 775 A1**
(43) Veröffentlichungstag der Anmeldung: **29.03.2023**
(21) Anmeldenummer: 22184009.3
(22) Anmeldetag: 11.07.2022
(51) Int. Cl.: G01S 17/894, G01S 17/931, G01S 17/06

(54) **VERFAHREN ZUR IDENTIFIKATION VON OBJEKTEN SOWIE LANDWIRTSCHAFTLICHE ARBEITSMASCHINE**

(30) Priorität: 22.09.2021 DE 102021124480
(71) Anmelder: CLAAS E-Systems GmbH, 49201 Dissen (DE)
(72) Erfinder: Redenius, Jannik, 32361 Pr. Oldendorf (DE)
(74) Vertreter: CLAAS Gruppe

(57) **Zusammenfassung**

Die vorliegende Erfindung betrifft ein Verfahren zur Identifikation von Objekten (26, 28) auf einer von einer landwirtschaftlichen Arbeitsmaschine (1) zu bearbeitenden Fläche (34), wobei die Arbeitsmaschine (1) eine Sensoranordnung (7) umfasst, durch die periodisch Sendepulse (8) aus elektromagnetischen Sendestrahlen (9) in mindestens einer Senderichtung (10 ausgesendet werden, wobei die Sendepulse (8) an den Objekten (26, 28) reflektiert und als Echopulse (11) von der Sensoranordnung (7) empfangen und an eine Steuerungseinheit (6) der Arbeitsmaschine (1) zur Auswertung übertragen werden, wobei für zumindest einen Teil der von der Sensoranordnung (7) ausgesendeten Sendepulse (8) unterschiedliche Teilstrahlen (12, 13) eines Sendestrahls (9) von in der jeweiligen Senderichtung (10) auf der Fläche (34) befindlichen Objekten (26, 28) zueinander zeitversetzt reflektiert werden, so dass sich der jeweils resultierende Echopuls (11) aus entsprechend zeitversetzten Teil-Echopulsen (11a, 11b) zusammensetzt, wobei mittels der Steuerungseinheit (6) basierend auf einer Pulsweite (15a, 15b) und/oder einer Pulsform (25) des resultierenden Echopulses (11) zwischen Objekten (28) hoher Permeabilität, insbesondere Pflanzenmaterial, und soliden Objekten (26) unterschieden wird.

## Beschreibung

Die vorliegende Erfindung betrifft ein Verfahren zur Identifikation von Objekten auf einer von einer landwirtschaftlichen Arbeitsmaschine zu bearbeitenden Fläche gemäß dem Oberbegriff des Anspruches 1. Weiterhin betrifft die vorliegende Erfindung eine landwirtschaftliche Arbeitsmaschine zur Durchführung eines solchen Verfahrens gemäß dem Anspruch 13.

Das Übersehen von Hindernissen im Umfeld einer landwirtschaftlichen Arbeitsmaschine, wie zum Beispiel ein Autoreifen im Erntebestand einer zu bearbeitenden Fläche, kann zu Beschädigungen der landwirtschaftlichen Arbeitsmaschine führen. Des Weiteren können sich Lebewesen im Erntebestand aufhalten, welche ggf. aufgrund ihres äußeren Erscheinungsbildes und ihres Verhaltens nicht zu sehen sind, so dass diese von einem Anbaugerät der der landwirtschaftlichen Arbeitsmaschine erfasst werden können. Eine manuelle wie auch eine (teil-)automatisierte Steuerung der landwirtschaftlichen Arbeitsmaschine, zum Beispiel während eines Erntevorganges, erfordert deshalb die ständige Aufmerksamkeit des Fahrzeugführers, um auf auftretende Gefahrensituationen, die zu einer Schädigung von Lebewesen und/oder der landwirtschaftlichen Arbeitsmaschine führen können, zu vermeiden. Eine autonom betriebene landwirtschaftliche Arbeitsmaschine erfordert diesbezüglich eine noch höhere Anforderung an die Umfelderkennung, um eine sichere und vorausschauende Betriebsweise zu gewährleisten. Prinzipiell ist es denkbar, bei einer hochautomatisierten oder autonom betriebenen landwirtschaftlichen Arbeitsmaschine auf auftretende Anomalien, wie eine plötzlich auftauchende Person oder ein Tier, eine Abweichung in der Struktur des erwarteten Pflanzenbestands, wie Lagergetreide, oder ein kreuzendes Fahrzeug, auf einer zu bearbeitenden Fläche mit einem Ausweichmanöver oder einem sofortigen Stillstand zu reagieren.

Diese defensive Steuerungsstrategie hat den Nachteil, dass es zu hohen Ausfallzeiten kommt, wenn die Anomalie unkritisch ist, d.h. keine Gefahr für Lebewesen und/oder Arbeitsmaschine und deren Anbaugeräte darstellt, was beispielhaft im Fall einer Abweichung in der Struktur des erwarteten Pflanzenbestands ist.

Für eine zuverlässige Klassifizierung sind neben einer als Laserscanner ausgeführten Sensoranordnung immer weitere Sensorsysteme wie z.B. ein Kamerasystem oder ein Radar erforderlich, wodurch der technische Aufwand sowie der zur Auswertung erforderliche Rechenaufwand erheblich sind.

Ein Verfahren gemäß dem Oberbegriff des Anspruches 1 ist aus der EP 1 672 390 A1 bekannt. Die EP 1 672 390 A1 beschreibt die parallele Verwendung eines Lasersystems und eines Radarsystems zur Detektion und Bestimmung von Objekten anhand einer Begrenzung oder Kante des Objekts auf einem Feld, hier im Umfeld der Forstwirtschaft. Die von dem jeweiligen System empfangenen Daten werden zunächst getrennt voneinander ausgewertet, da das Lasersystems und das Radarsystems unterschiedlich große Erfassungsbereiche haben. In einem nachfolgenden Schritt wird die jeweilige Auswertungen bezogen auf die einander räumlich überlappenden Erfassungsbereiche zusammengeführt, um diese anschließend hinsichtlich des Vorhandenseins von Objekten im Sinne von Baumstümpfen, Bäumen und dergleichen auszuwerten.

Der Erfindung liegt die Aufgabe zugrunde, ein Verfahren der eingangs genannten Art weiterzubilden, bei welchem das Erkennen und das Identifizieren von Objekten mit reduziertem messtechnischen Aufwand sowie reduzierter Rechenleistung bei erhöhter Genauigkeit durchgeführt wird.

Die vorstehende Aufgabe wird bei einem Verfahren gemäß dem Oberbegriff des Anspruches 1 durch die Merkmale des kennzeichnenden Teils des Anspruches 1 gelöst. Weiterhin wird diese Aufgabe aus vorrichtungstechnischer Sicht ausgehend vom Oberbegriff des Anspruchs 13 in Verbindung mit dessen kennzeichnenden Merkmalen gelöst. Die hierauf jeweils folgenden, abhängigen Ansprüche geben vorteilhafte Weiterbildungen der Erfindung wieder.

Gemäß dem Anspruch 1 wird ein Verfahren zur Identifikation von Objekten auf einer von einer landwirtschaftlichen Arbeitsmaschine zu bearbeitenden Fläche vorgeschlagen, wobei die Arbeitsmaschine eine Sensoranordnung umfasst, durch die periodisch Sendepulse aus elektromagnetischen Sendestrahlen in mindestens einer Senderichtung die zu bearbeitende Fläche ausgesendet werden, wobei die Sendepulse an den Objekten reflektiert und als Echopulse von der Sensoranordnung empfangen und an eine Steuerungseinheit der Arbeitsmaschine zur Auswertung übertragen werden, wobei für zumindest einen Teil der von der als Laserscanner ausgeführten Sensoranordnung ausgesendeten Sendepulse unterschiedliche Teilstrahlen ein und desselben Sendestrahls von in der jeweiligen Senderichtung auf der Fläche befindlichen Objekten zueinander zeitversetzt reflektiert werden, so dass sich der jeweils resultierende Echopuls aus entsprechend zeitversetzten Teil-Echopulsen zusammensetzt. Erfindungsgemäß ist vorgesehen, dass mittels der Steuerungseinheit basierend auf einer Pulsweite innerhalb des resultierenden Echopulses und/oder einer Pulsform, d.h. einer zeitlichen Signalform, des resultierenden Echopulses zwischen Objekten hoher Permeabilität, insbesondere Pflanzenmaterial, und soliden Objekten unterschieden wird.

Wesentlich ist die grundsätzliche Überlegung, dass durch das Detektieren von Konturen einer Umgebung, die anhand von mathematischen und geometrischen Eigenschaften von Punkten einer mittels der Abtastung durch den Laserscanner erzeugten Punktwolke abgeleitet werden, hinauszugehen und durch zusätzlich zur Verfügung stehende Informationen der resultierenden Echopulse, d.h. der von den Objekten reflektierten Laserpulse, nämlich deren Pulsweite und/oder ihrer Pulsform zwischen Pflanzenmaterial als Objekten hoher Permeabilität und soliden Objekten zu unterscheiden. Das Verfahren macht sich die unterschiedliche Permeabilität der abgetasteten Objekte zunutze, um zwischen Pflanzenmaterial, welches für die Arbeitsmaschine unkritisch ist, wenn dieses überfahren wird, und soliden Objekten, wie Lebewesen oder sonstigen massiven Gegenständen, zu unterscheiden, deren überfahren eine Gefährdung des Lebewesens bzw. eine Beschädigung der landwirtschaftlichen Arbeitsmaschine zur Folge haben kann.

Weiterhin kann aus der Laufzeit eines Sendepulses bis zum Empfang des jeweiligen resultierenden Echopulses ein Abstandwert zum detektierten Objekt ermittelt werden. Durch die gemeinsame Auswertung von Pulsweite und/oder Pulsform in Verbindung mit den bestimmten Abstandswerten kann die Differenzierung zwischen Pflanzenmaterial bzw. Vegetation und soliden Objekten verbessert werden. Die Differenzierung zwischen Vegetation und soliden Objekten wird anhand der zeitlichen Signalform der rückgestreuten Laserpulse durchgeführt, da Pflanzen im Gegensatz zu soliden Objekten in der Regel Strukturen aufweisen, die kleiner als ein fokussierter Lasermessfleck sind. Ein einzelner Laserpuls wird im Fall von Pflanzen im Bereich seiner Strahldivergenz nur in Teilen reflektiert, wodurch sich die Pulsweite erhöht.

Bevorzugt können die Reflexionsintensität des jeweiligen resultierenden Echopulses, die Wellenlänge und/oder Umgebungslichtverhältnisse bestimmt werden. Hierzu kann der Laserscanner dazu eingerichtet sein, Signale bereitzustellen, durch die neben der Pulsweite und/oder der Pulsform, d.h. der zeitlichen Signalform der Echopulse, eine Auswertung der Reflexionsintensität, bestehender Umgebungslichtverhältnisse und/oder der Wellenlänge der reflektierten Sendepulse ermöglicht wird. Mittels der Reflexionsintensität kann die Oberflächenfarbe und/oder die Oberflächenrauheit bestimmt werden. Die Auswertung der Wellenlänge kann ebenfalls zur Bestimmung der Oberflächenfarbe und/oder der Oberflächenrauheit herangezogen werden. Darüber hinaus kann anhand der Wellenlänge der reflektierten Sendepulse auf die Zusammensetzung des Objektes geschlossen werden.

Insbesondere können basierend auf der Pulsweite und/oder der Pulsform detektierte solide Objekte identifiziert und klassifiziert werden. So kann auf der Grundlage von räumlichen bzw. geometrischen Gemeinsamkeiten, wie der räumlichen Ausdehnung und/oder der Verortung, der Messpunkte, welche sich bei dem Laserscanner aus der Laufzeit des emittierten Sendepulses bis zum detektierten Echopuls bzw. Reflexionspuls ergibt und andererseits auf der Grundlage von gemeinsamen detektierten Objekteigenschaften, welche sich aus dem Puls- und Intensitätsverlauf ergeben. Eine Gegenüberstellung der Pulsverläufe kann durch Frequenzanalysen, bspw. Fourier-Analysen, realisiert werde, woraus sich im weiteren Prozess der Auswertung Materialeigenschaften der Objekte erkennen lassen, sodass ähnliche Pulsverläufe gruppiert werden. Eine vorverarbeitete Punktwolke kann so in Sektoren bezüglich räumlicher und objektspezifischer Gemeinsamkeiten zusammengefasst werden, die sich auf Grundlage des Pulsverlaufes bestimmen lassen.

Insbesondere kann zur Klassifizierung die aus dem resultierenden Echopuls bestimmte Pulsweite und/oder Pulsform mit für die zu detektierenden Objekte bekannten Funktionen für Referenz-Pulsweiten und/oder Referenz-Pulsformen von bekannten Objekten verglichen werden. Hierzu kann aus der Klasse der bekannten Funktionen die Referenz-Pulsweite und /oder Referenz-Pulsform ausgewählt werden, welche der aus dem resultierenden Echopuls bestimmten Pulsweite und/oder Pulsform am nächsten kommt. Die Klassifizierung verschiedener solider Objekte kann anhand eines Streuungsmaßes der Reflexionshöhe und/ oder der Signatur der Pulsform durch einen Vergleich mit Referenzkurven durchgeführt werden. Dabei kann als Streuungsmaß eine Varianz, eine Standardabweichung oder ein Quantil, insbesondere ein 10%-Quantil, verwendet werden. Alternativ kann die Unterscheidung zwischen verschiedenen soliden Objekten anhand der Pulsweite bezogen auf einen vorgegebenen Schwellwert für eine Akkumulation von Messwerten in einem räumlich begrenzten Segment der zu bearbeitenden Fläche durchgeführt werden.

Besonders vorteilhaft ist, dass basierend auf der Pulsweite und/oder der Pulsform des resultierenden Echopulses solide Objekte erkannt werden können, die sich auf Höhe einer Bestandshöhe eines Feldbestands oder niedriger befinden. Während eine reine Distanzbestimmung durch Auswertung der Punktwolke es nicht ermöglicht, solide Objekte durch Unterscheidung vom umgebenden Pflanzenmaterial zu detektieren, die sich auf oder unterhalb der Bestandshöhe des Pflanzenmaterials auf der zu bearbeitenden Fläche befinden, ermöglicht die Auswertung basierend auf der Pulsweite und/oder der Pulsform des resultierenden Echopulses das Unterscheiden eines beispielsweise im Pflanzenbestand liegenden Steins als solides Objekt, welcher nicht über den Pflanzenbestand hinausragt.

Weiterhin kann aus den Abstandswerten der als Pflanzenmaterial bestimmten Objekte die Bestandshöhe des Feldbestands auf der zu bearbeitenden Fläche bestimmt werden. Die Kenntnis der Bestandhöhe ist insbesondere bei einem Erntevorgang relevant, um Erntegutverluste zu vermeiden, die aus einer unangepassten Einstellung an einem der Aufnahme des Erntegutes dienenden Vorsatzgerätes resultieren können. Beispielhaft sei ein Getreideschneidwerk als Vorsatzgerät der Arbeitsmaschine genannte, dessen unangepasste Einstellung, beispielsweise der eingestellten Schnitthöhe, der Ausfahrlänge des Schneidwerkstischs und/oder der vertikalen und/oder horizontalen Positionierung der Haspel, zu Erntegutverlusten führen kann.

Eine weitere Verbesserung beim, insbesondere autonomen, Betreiben der landwirtschaftlichen Arbeitsmaschine kann erreicht werden, indem basierend auf der Pulsweite und/oder der Pulsform des resultierenden Echopulses das Auftreten einer Staubwolke auf der zu bearbeitenden Fläche als ein von einem soliden Objekt abweichendes Objekt identifiziert und klassifiziert wird. So unterscheidet sich eine Staubwolke durch eine höhere Pulsweite der Echopulse von den Echopulsen des Pflanzenmaterials. Von einem soliden Objekt, welches nicht überfahren werden darf bzw. soll, kann die Staubwolke anhand ihrer Pulsform unterschieden werden.

Gemäß einer bevorzugten Weiterbildung kann basierend auf der Klassifikation eines Objektes zumindest eine Handlungsanweisung durch die Steuerungseinheit generiert werden, um den Betrieb der Arbeitsmaschine zu beeinflussen. Eine Handlungsanweisung ist eine Reaktion auf die Detektion von Objekten im Umfeld der landwirtschaftlichen Arbeitsmaschine. Als Umfeld der landwirtschaftlichen Arbeitsmaschine sind insbesondere das Vorfeld und/oder die Bereiche seitlich und/oder hinter der Arbeitsmaschine zu verstehen. Wird eine Staubwolke als Objekt identifiziert, so kann die Steuerungseinheit als eine Handlungsanweisung die Mitteilung ausgeben, dass ein Durchfahren der Staubwolke keine Beschädigungen an der Arbeitsmaschine verursacht bzw. als Handlungsanweisung das Unterlassen der Ausgabe eines Steuerbefehls, der zum Stillstand der Arbeitsmaschine führt. Alternative Handlungsanweisungen können im Reduzieren der Fahrgeschwindigkeit, ggf. bis zum Stillstand oder dem sofortigen Stillsetzen der Arbeitsmaschine und ihrer Anbaugeräte bestehen. Ebenso ist das Generieren von Handlungsanweisungen denkbar, die ein Umfahren des detektierten Objektes oder ein Überfahren des Objektes mit angehobenem Anbaugerät umfassen.

Insbesondere kann zumindest eine zusätzliche, von einem Laserscanner abweichende, optische Sensoranordnung zur Klassifikation eines Objektes verwendet werden. Eine Einbeziehung einer optischen Sensoranordnung, die nicht als Laserscanner ausgeführt ist, kann zu einer Verbesserung des Analysevorgangs bei der Klassifikation beitragen. Beispielsweise kann eine Kamera als optische Sensoranordnung vorgesehen sein, welche Bilder im sichtbaren Spektralbereich generiert. Alternativ kann eine Kamera als optische Sensoranordnung vorgesehen sein, welche Bilder im Nahinfrarotbereich generiert. Durch das Einbeziehen von RGB-Kamerabildern oder Infrarotkamerabildern sowie zusätzlicher spezifischer Merkmale der zu detektierenden soliden Objekte, wie Form, Farbe Struktur und dergleichen, kann das Ergebnis der Klassifikation verbessert werden.

Bevorzugt können zur Analyse des jeweiligen resultierenden Echopulses statistische oder adaptive Schwellwertverfahren oder nicht-analytische Verfahren verwendet werden. Lediglich beispielhaft seien hierfür das gaußsche Eliminationsverfahren, Support Vector Machine oder künstliche neuronale Netzwerke genannt, mittels der eine Klassifizierung durchgeführt wird.

Gemäß einer Weiterbildung kann die Analyse des jeweiligen resultierenden Echopulses auf räumliche Bereiche der durch die landwirtschaftliche Arbeitsmaschine zu bearbeitende Fläche begrenzt werden, in denen anhand einer von dem Laserscanner erzeugten Punktwolke ein als von Pflanzenmaterial abweichendes Objekt identifiziert wurde. Hierdurch lässt sich die Performanz des Verfahrens optimieren. Weiterhin lassen sich dadurch der erforderliche Speicherbedarf sowie die erforderliche Rechenleistung reduzieren.

Nach einer Lehre gemäß dem Anspruch 13, welcher eigenständige Bedeutung zukommt, wird eine landwirtschaftliche Arbeitsmaschine, insbesondere eine selbstfahrende Erntemaschine oder ein Traktor, zur Durchführung des vorschlagsgemäßen Verfahrens als solches beansprucht. Auf alle Ausführungen zu dem vorschlagsgemäßen Verfahren, die geeignet sind, die Arbeitsmaschine zu erläutern, darf verwiesen werden.

Bevorzugt kann der Laserscanner als ein Solid-State LiDAR, ein Geiger-mode Lidar, ein Scanning LiDAR oder ein Single Photon LiDAR ausgeführt sein. Diese LiDAR-Sensoren zeichnen sich durch eine hohe Auflösung aus, was die Eindeutigkeit der Zuordnung der zeitlichen Signalform der Echopulse, beispielsweise mittels klassischer statischer oder adaptiver Schwellwertverfahren oder künstlicher neuronaler Netzwerke verbessert.

Darüber hinaus können unterschiedliche Methoden der digitalen Bildverarbeitung zur Auswertung projizierter Sensordaten des Laserscanners zur Anwendung kommen. Entsprechend kann die Steuerungseinheit zur Bildverarbeitung und Bildauswertung eingerichtet sein.

Die vorliegende Erfindung wird nachstehend anhand eines in den Zeichnungen dargestellten Ausführungsbeispieles näher erläutert.

Es zeigen:
- Fig. 1: eine Arbeitsmaschine zur Durchführung eines vorschlagsgemäßen Verfahrens mit einer Sensoranordnung während des Aberntens eines Feldbestands a) in einer Seitenansicht und b) in einer Draufsicht,
- Fig. 2: den Feldbestand gemäß Fig. 1 in einer Ansicht entlang der Fahrtrichtung der Arbeitsmaschine;
- Fig. 3: a) einen Sendepuls der Sensoranordnung gemäß Fig. 1 und b) der dem Sendepuls zugeordnete, resultierende Echopuls einer Pflanze;
- Fig. 4: a) ein einem Sendepuls zugeordneter, resultierender Echopuls eines soliden Objekts und b) ein einem Sendepuls zugeordneter, resultierender Echopuls eines Objekts höherer Permeabilität;
- Fig. 5: a) eine Ansicht einer zu bearbeitenden Fläche mit einem darauf befindlichen Objekt, welches die Bestandhöhe von Pflanzen als weitere Objekte auf der Fläche überragt, b) eine Punktwolke der Fläche, auf der vorhandene Objekte basierend auf einer Distanzmessung detektiert und klassifiziert wurden und c) eine Punktwolke der Fläche, auf der vorhandene Objekte basierend auf Pulsweite und/oder Pulsform detektiert und klassifiziert wurden;
- Fig. 6: a) eine Ansicht einer zu bearbeitenden Fläche mit einem darauf befindlichen Objekt, welches bis an die Bestandhöhe heranragt, b) eine Punktwolke der Fläche, auf der vorhandene Objekte basierend auf der Distanzmessung detektiert und klassifiziert wurden und c) eine Punktwolke der Fläche, auf der vorhandene Objekte basierend auf Pulsweite und/oder Pulsform detektiert und klassifiziert wurden; und
- Fig. 7: a) eine Ansicht einer zu bearbeitenden Fläche mit einem darauf befindlichen Objekt, welches sich unterhalb der Bestandhöhe befindet, b) eine Punktwolke der Fläche, auf der vorhandene Objekte basierend auf der Distanzmessung detektiert und klassifiziert wurden und c) eine Punktwolke der Fläche, auf der vorhandene Objekte basierend auf Pulsweite und/oder Pulsform detektiert und klassifiziert wurden.

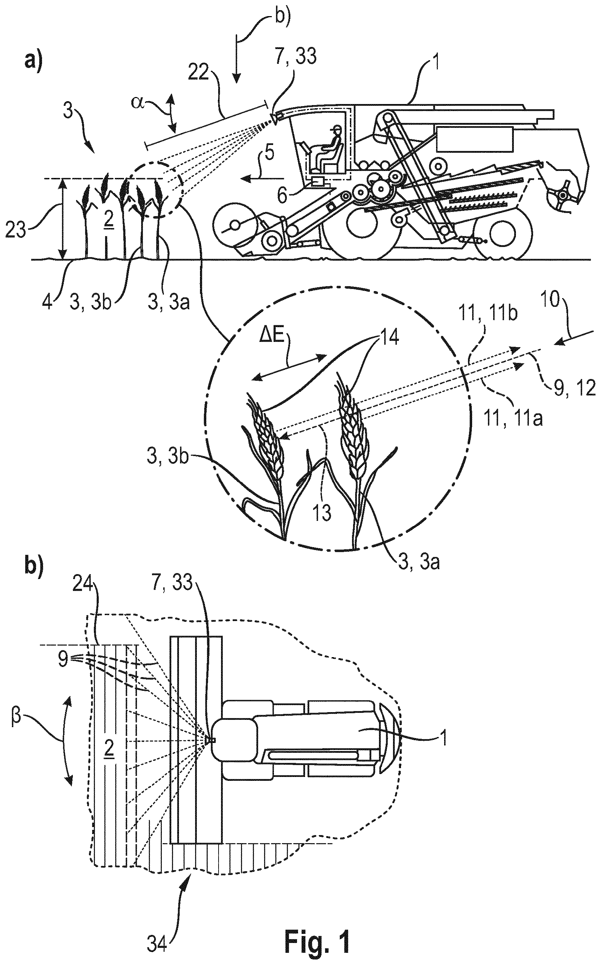

Die in Fig. 1 dargestellte, vorschlagsgemäße Arbeitsmaschine 1, die als selbstfahrende Erntemaschine ausgeführt ist, dient dem Bearbeiten einer landwirtschaftlich genutzten Fläche 34, hier dem Abernten eines Feldbestands 2 auf der Fläche 34, der aus einer Mehrzahl von Pflanzen 3 besteht. Die Pflanzen 3 des Feldbestands 2 befinden sich auf einem Feldboden 4, wie ebenfalls der Darstellung gemäß Fig. 1 zu entnehmen ist. Die Arbeitsmaschine 1 kann auch als Traktor mit daran angeordnetem oder gezogenem Anbaugerät ausgeführt sein.

Während des Erntebetriebs befindet sich der Feldbestand 2 in Fahrtrichtung 5 der Arbeitsmaschine 1 gesehen vor der Arbeitsmaschine 1. Von der Arbeitsmaschine 1 aus gesehen existieren die vordersten Pflanzen 3a und die bestandsinneren Pflanzen 3b.

Die Arbeitsmaschine 1 weist eine Steuerungseinheit 6 und eine Sensoranordnung 7 auf, wobei mittels der Sensoranordnung 7 periodisch Sendepulse 8 aus elektromagnetischen Sendestrahlen in mindestens einer Senderichtung 10 auf den Feldbestand 2 ausgesendet werden. Die Sendepulse 8 werden am Feldbestand 2 reflektiert und als Echopulse 11 von der Sensoranordnung 7 empfangen. Die in Fig. 1 dargestellte, insbesondere mittige, Anordnung der Sensoranordnung 7 am Kabinendach der Arbeitsmaschine 1 ist lediglich beispielhaft zu verstehen. Hiervon abweichend sind auch andere Stellen der Anordnung der Sensoranordnung 7 an der Arbeitsmaschine 1 und/oder an einem von der Arbeitsmaschine 1 aufgenommenen Anbaugerät bzw. Vorsatzgerät denkbar.

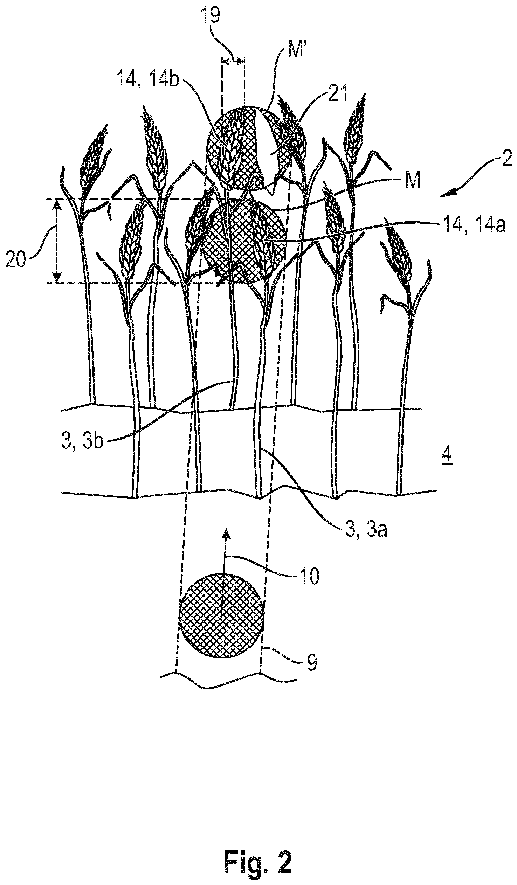

Eine Zusammenschau der Fig. 1 und Fig. 2 zeigt, dass für zumindest einen Teil der Sendepulse 8 unterschiedliche Teilstrahlen 12, 13 von in der jeweiligen Senderichtung 10 hintereinanderliegenden Pflanzen 3a, 3b des Feldbestands 2 zueinander zeitversetzt reflektiert werden. Der Grund hierfür besteht darin, dass der Teilstrahl 13 in Fig. 1a) verglichen mit dem Teilstrahl 12 einen zusätzlichen Weg, nämlich das Zweifache des Wegs ΔE, durchlaufen muss. Der Zeitversatz ergibt sich entsprechend aus der Division des zusätzlichen Wegs durch die Ausbreitungsgeschwindigkeit des Sendestrahls 9.

Fig. 2 zeigt, dass dem Sendestrahl 9 an der Pflanze 3a ein Messfleck M zugeordnet ist, der durch den Strahlquerschnitt des Sendestrahls 9 definiert ist. Die Pflanzen 3 des Feldbestands 2 sind hier und vorzugsweise mit Ähren 14 ausgestattet, wobei die Ähre 14a der vorderen Pflanze 3a die Reflexion des ersten Teilstrahls 12 bewirkt, während die Ähre 14b der hinteren Pflanze 3b die Reflexion eines zweiten Teilstrahls 13 bewirkt.

Bei der Darstellung des Sendestrahls 9 sowie der Teilstrahlen 12, 13 in der Zeichnung handelt es sich um einen idealisierten Zustand. In einer realen Umgebung ergeben sich meist eine Vielzahl von Teilstrahlen 12, 13 aus ein und demselben Sendestrahl 9, auf die das vorschlagsgemäße Grundprinzip jeweils analog anwendbar ist. Insoweit gelten alle Ausführungen zu den Teilstrahlen 12, 13 für alle anderen, eventuell auftretenden Teilstrahlen entsprechend.

Fig. 2 zeigt, dass der Strahlquerschnitt des Sendestrahls 9 eine gewisse Mindesterstreckung aufweisen muss, um die vorschlagsgemäße Mehrfachreflexion des Sendestrahls 9 zu ermöglichen. Hier und vorzugsweise ist es so, dass der Sendestrahl 9 an den bezogen auf die jeweilige Senderichtung vordersten Pflanzen 3a einen rundlichen Strahlquerschnitt ausbildet.

Bei Pflanzen 3 mit länglichen Ähren 14 ist der Messfleck vorzugsweise so ausgelegt, dass der Sendestrahl 9 an der betreffenden Ähre 14 vorbeistrahlen kann. Im Einzelnen ist es vorzugsweise so, dass die Pflanzen 3 längliche Ähren 14 mit einer mittleren Breitenerstreckung 19 ausbilden, wobei dem Sendestrahl 9 an den Ähren 14 der bezogen auf die jeweilige Senderichtung 10 vordersten Pflanzen 3a auf Grund seines Strahlquerschnitts ein Messfleck M zugeordnet ist, dessen Durchmesser 20 zumindest in einer Richtung größer, insbesondere um das mindestens zweifache größer, als die Breitenerstreckung 19 der Ähren 14 ist. Dieser Zusammenhang ist in Fig. 2 schematisch angedeutet. Fig. 2 zeigt weiter, dass der Messfleck M' im Bereich der bestandsinneren Pflanze 3b einen ausgenommenen Bereich 21 ausbildet, der sich aus der Reflexion des Teilstrahls 12, also durch die resultierende Abstrahlung, ergibt.

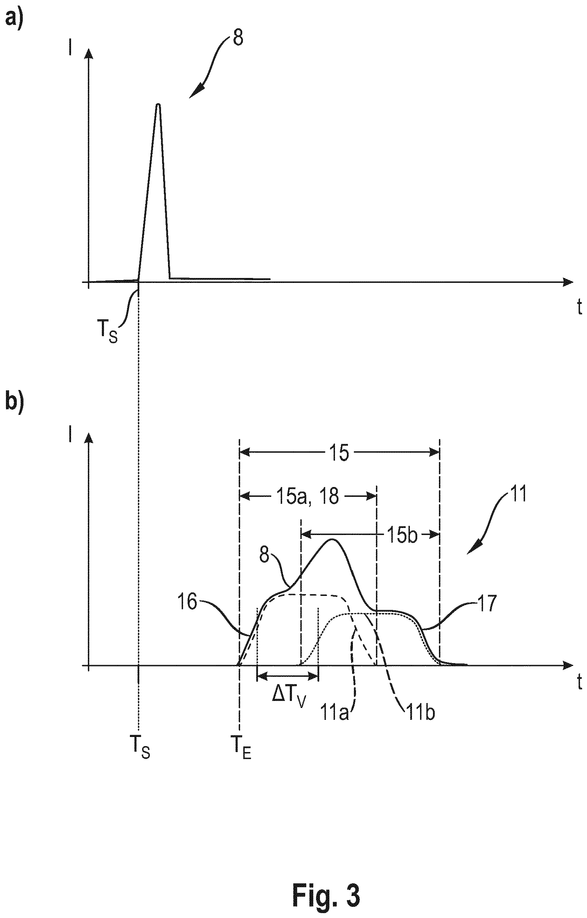

Aus der zeitversetzten Reflexion der Teilstrahlen 12, 13 ergibt sich, dass sich der jeweils resultierende Echopuls 11 aus entsprechend zeitversetzten Teil-Echopulsen 11a, 11b zusammensetzt, wie der Darstellung gemäß Fig. 3 zu entnehmen ist. Dabei zeigt Fig. 3a) zunächst den Sendepuls 8, der von der Sensoranordnung 7 in einer Senderichtung 11 auf den Feldbestand 2 ausgesendet wird. In Fig. 3a) ist der Sendepuls 8 durch seine Lichtleistung I über der Zeit t dargestellt.

Die Darstellung in Fig. 3b) zeigt einen dem Sendepuls 8 zugeordneten, resultierenden Echopuls 11 einer der Pflanzen 3. Eine entsprechende Darstellung des resultierenden Echopulses 11 findet sich in Fig. 3b). Hier zeigt sich, dass sich der jeweils resultierende Echopuls 11 aus entsprechend zeitversetzten Teil-Echopulsen 11a, 11b zusammensetzt. Bei dem dargestellten Ausführungsbeispiel heißt dies, dass sich der resultierende Echopuls 11 aus einer Addition der beiden Teil-Echopulse 11a, 11b ergibt. Der Zeitversatz ΔTv entspricht der oben genannten Zeit, die der Sendestrahl 9 für das zweifache Durchlaufen der Strecke ΔE benötigt. Aus dem in Fig. 3b) gezeigten Verlauf ergibt sich, dass die beiden Teil-Echoimpulse 11a, 11b im Zeitbereich ineinander übergehen. Je nach Struktur des Feldbestands 3 kann es aber auch sein, dass die Teil-Echoimpulse 11a, 11b im Zeitbereich voneinander separiert sind.

Eine Zusammenschau der Fig. 1, Fig. 2 und Fig. 3 ergibt, dass die Strecke ΔE, die vorliegend auch als "Eindringtiefe" bezeichnet wird, Aufschluss über die Bestandsdichte geben kann. Interessant dabei ist die Tatsache, dass sich die Eindringtiefe ΔE aus dem Zeitversatz ΔTv ableiten lässt. Mittels der Steuerungsanordnung 6 wird basierend auf einem zeitlichen Zusammenhang innerhalb des resultierenden Echopulses 11 ein Wert für die Bestandsdichte ermittelt wird. Bei dem obigen zeitlichen Zusammenhang handelt es sich um den oben angesprochenen Zeitversatz ΔTV zwischen zwei Teil-Echopulsen 11a, 11b, hier zwischen dem ersten Teil-Echopuls 11a und dem letzten Teil-Echopuls 11b, die einem Sendepuls 9 zugeordnet sind.

Fig. 3b) zeigt, dass der Zeitversatz ΔTv aus dem resultierenden Echopuls 11 gewissermaßen abgeleitet werden kann. Vorzugsweise ist es so, dass der Zeitversatz ΔTv aus einer Pulsweite 15 des resultierenden Echopulses 11 ermittelt wird, wobei die Pulsweite 15 durch den zeitlichen Abstand zwischen der ersten ansteigenden Pulsflanke 16 und der letzten abfallenden Pulsflanke 17 des resultierenden Echopulses 11 definiert ist.

Weiterhin ist es vorgesehen, dass der Zeitversatz ΔTv ermittelt wird, indem von der Pulsweite 15 eine Normierungsweite 18 subtrahiert wird, wobei die Normierungsweite 18 vorzugsweise definiert ist durch eine Pulsweite 15a des resultierenden Echopulses 11a, die sich bei einer unterstellten Einfachreflexion des Sendestrahls 9 an einer Pflanze 3a des Feldbestands 2 ergeben würde. Bei dem dargestellten und insoweit bevorzugten Ausführungsbeispiel handelt es sich bei der Normierungsweite 18 also um die Pulsweite 15a des ersten Teil-Echopulses 11a. Dabei wird der Einfachheit halber unterstellt, dass die Pulsweiten 15a, 15b der beiden Teil-Echopulse 11a, 11b zueinander identisch sind.

Wie oben angesprochen, lässt sich der Wert für die Bestandsdichte grundsätzlich aus der Eindringtiefe ΔE ermitteln. Vorzugsweise ist es vorgesehen, dass der Wert für die Bestandsdichte ermittelt wird, indem der Kehrwert der Eindringtiefe ΔE des Sendestrahls 9 in den Feldbestand 2 gebildet wird und dass die Eindringtiefe ΔE aus dem Produkt des Zeitversatzes ΔTv mit der Ausbreitungsgeschwindigkeit und ggf. mit einem Normierungsfaktor ermittelt wird. Dieser Kehrwert ist dann noch mit einem Proportionalitätsfaktor zu multiplizieren, um je nach Definition der Bestandsdichte zu dem jeweils gewünschten Wert für die Bestandsdichte zu gelangen.

Für die Auslegung der Sensoranordnung 7 sind verschiedene vorteilhafte Varianten denkbar. Hier und vorzugsweise ist es so, dass die elektromagnetischen Strahlen optische Strahlen, insbesondere Laserstrahlen, sind, deren Senderichtung 10 mittels der Steuerungseinheit 6 einstellbar ist. In besonders bevorzugter Ausgestaltung handelt es sich bei der Sensoranordnung 7 um einen Laserscanner 33, der den Feldbestand 2 in horizontal ausgerichteten Zeilen abscannt. Hierfür lässt sich der Neigungswinkel α des Sendestrahls 9 um die Horizontale und der Scanwinkel β um die Vertikale mittels der Steuerungsanordnung 6 einstellen.

Vorzugsweise ist die Sensoranordnung 7 als optischer Abstandssensor ausgestaltet, wobei mittels der Sensoranordnung 7 aus dem zeitlichen Abstand des Sendezeitpunkts TS eines Sendepulses 8 zu dem Empfangszeitpunkt T_{E} des zugeordneten Echopulses 11 ein Abstandswert 22 zwischen der Sensoranordnung 7 und der jeweils reflektierenden Pflanze 3a ermittelt wird. Wie weiter oben angesprochen, handelt es sich bei der Sensoranordnung 7 vorzugsweise um eine Time-of-Flight-Sensoranordnung.

Bei der als Laserscanner 33 ausgeführten Sensoranordnung 7 ist es vorzugsweise so, dass die Senderichtung 10 der Sensoranordnung 7 mittels der Steuerungseinheit 6 fortlaufend in horizontaler Richtung und/oder in vertikaler Richtung modifiziert wird. In besonders bevorzugter Ausgestaltung ist es vorgesehen, dass mittels der Steuerungseinheit 6 aus den Abstandswerten und/oder den Werten für die Bestandsdichte eine Bestandshöhe 23 ermittelt wird. Im Falle des oben angesprochenen Laserscanners 33 ist dabei ein zeilenweises Abtasten des Feldbestands 2 vorgesehen, wobei der Neigungswinkel α zunehmend flacher gewählt wird. Beim Erreichen der oberen Kammlinie des Feldbestands 2 ändern sich nicht nur die oben angesprochenen Abstandswerte, sondern auch die Werte für die Bestandsdichte sprunghaft, woraus sich die Lage der Kammlinie automatisiert erfassen lässt.

Alternativ oder zusätzlich kann es vorgesehen sein, dass mittels der Steuerungseinheit 6 aus den Abstandswerten und/oder den Werten für die Bestandsdichte die Lage einer seitlichen Bestandskante 24 ermittelt wird. Auch dies lässt sich durch die automatisierte Erfassung einer sprunghaften Änderung in den betreffenden Werten bewerkstelligen.

Alternativ oder zusätzlich ist es weiter vorgesehen, dass mittels der Steuerungseinheit 6 aus den Abstandswerten und/oder den Werten für die Bestandsdichte die Lage eines Hindernisses 27 ermittelt wird, welches nachfolgend als solides Objekt 26 bezeichnet wird. Auch diese Ermittlung lässt sich auf die automatisierte Erfassung einer sprunghaften Änderung der betreffenden Werte zurückführen.

Solide Objekte 26 können sich durch ein oder mehrere Merkmale voneinander unterscheiden, beispielsweise dadurch, dass das solide Objekt mobil oder immobil ist und/oder dass das solide Objekt 26 beschädigungsfrei überfahrbar ist. Die Bestimmung eines soliden Objektes 26, 27 alleine anhand der Abstandswerte ermöglicht eine solche Differenzierung nicht. Um die detektierten Objekte 26, 27 konkret hinsichtlich ihres Gefahrenpotentials für sich sowie für die Arbeitsmaschine 1 zu identifizieren ist vorgesehen, dass durch das Verarbeiten und Auswerten der zeitlichen Signalform der Echopulse 11, die von der als Laserscanner 33 ausgeführten Sensoranordnung 7 bereitgestellt werden, die im Umfeld, hier und vorzugsweise im Vorfeld, der Arbeitsmaschine 1 befindlichen Objekte 26 klassifiziert werden. Anhand der Klassifizierung soll zwischen überfahrbaren und durch die Arbeitsmaschine 1 nicht überfahrbaren Objekten 26, 27 unterschieden werden.

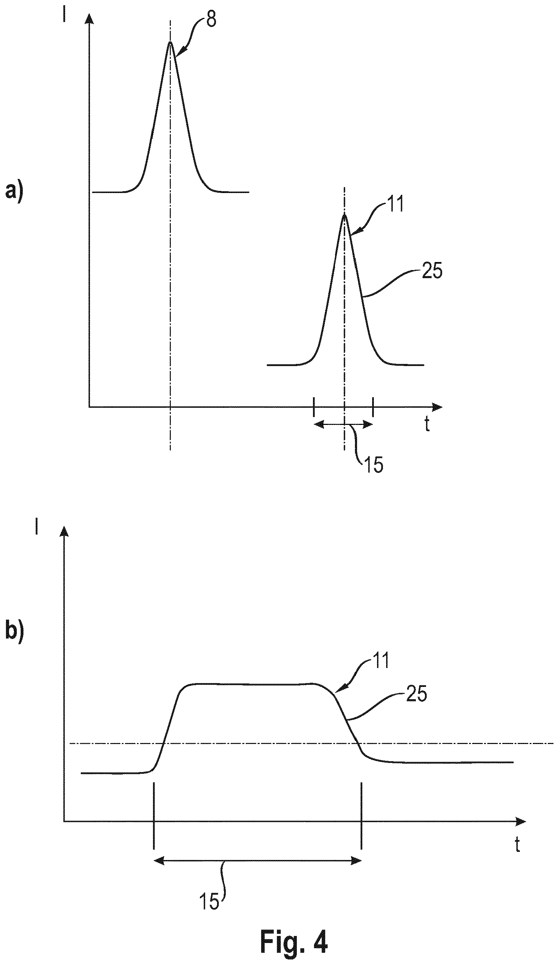

Die Darstellung in Fig. 4a) zeigt einen dem Sendepuls 8 zugeordneten, resultierenden Echopuls 11 eines soliden Objekts 26 und b) der dem Sendepuls 8 zugeordnete, resultierende Echopuls 11 eines Objekts 28 höherer Permeabilität, hier einer der Pflanzen 3. Der Echopuls 11 des soliden Objekts 26 gemäß Fig. 4a), bei dem es sich beispielsweise um Steine, einen Mast, einen Feldbrunnen, ein Fahrzeug, ein Lebewesen und dergleichen mehr handeln kann, weist eine Pulsform 25 auf, welche im Wesentlichen einer Gaußkurve entspricht. Im Unterschied zu soliden Objekten 26 weisen die Pflanzen 3, 3a, 3b in der Regel Strukturen auf, die kleiner als der fokussierte Lasermessfleck M, M' sind. Ein einzelner Sendepuls 8 wird im Bereich seiner Strahldivergenz nur in Teilen reflektiert, wodurch sich die Pulsweite 15 des Echopulses 11 erhöht, wie in Fig. 4b) beispielhaft angedeutet. Die Pulsform 25 des Echopulses 11 der Pflanze 3 gemäß Fig. 4b) ist abgeflacht und entspricht einem trapezförmigen Verlauf. Bei Reflexion des Sendepulses 8 an einem Objekt 28 mit hoher Permeabilität wie einem Pflanzenbestand 3 ist mit einer deutlich verlängerten Pulsweite 15 zu rechnen.

Mittels der Steuerungseinheit 6 wird basierend auf der Pulsweite 15 innerhalb des resultierenden Echopulses 11 und/oder der Pulsform 25 des resultierenden Echopulses 11 zwischen Pflanzenmaterial respektive Pflanzen 3 als Objekten 28 höherer Permeabilität und soliden Objekten 26 unterschieden. Mit zunehmender Permeabilität des Objekts 28 nimmt die Pulsweite 15 des resultierenden Echopulses 11 zu und kann der Verlauf der Pulsform 25 abflachen.

Daneben kann die bereits beschriebene Distanzmessung, bei welcher aus der Laufzeit eines Sendepulses 8 bis zum Empfang des jeweiligen resultierenden Echopulses 11 ein Abstandwert 22 zum detektierten Objekt 26, 27, 28 ermittelt wird, herangezogen werden, um auf der zu bearbeitenden Fläche 34 befindliche Objekte 26, 27, 28 zu identifizieren und zu klassifizieren.

Ein wesentlicher Vorteil ergibt sich dabei im Hinblick auf solide Objekte 26, die sich in vertikaler lediglich bis zur Bestandhöhe 23 erstrecken oder niedriger sind. Derartige solide Objekte 26 respektive Hindernisse 27, wie beispielsweise ein Betonsockel, welcher nicht über den Feldbestand 2 hinausragt, können mittels der Bestimmung von Abstandswerten 22 bei der Distanzmessung nicht detektiert werden, da zwischen dem soliden Objekt 26 und den umgebenden Pflanzen als Objekten 28 höherer Permeabilität nicht differenziert werden kann. Weitere solide Objekte 26 können Steine oder ein Feldbrunnen sein, welche lediglich teilweise oder nicht über den Feldbestand 2 hinausragen.

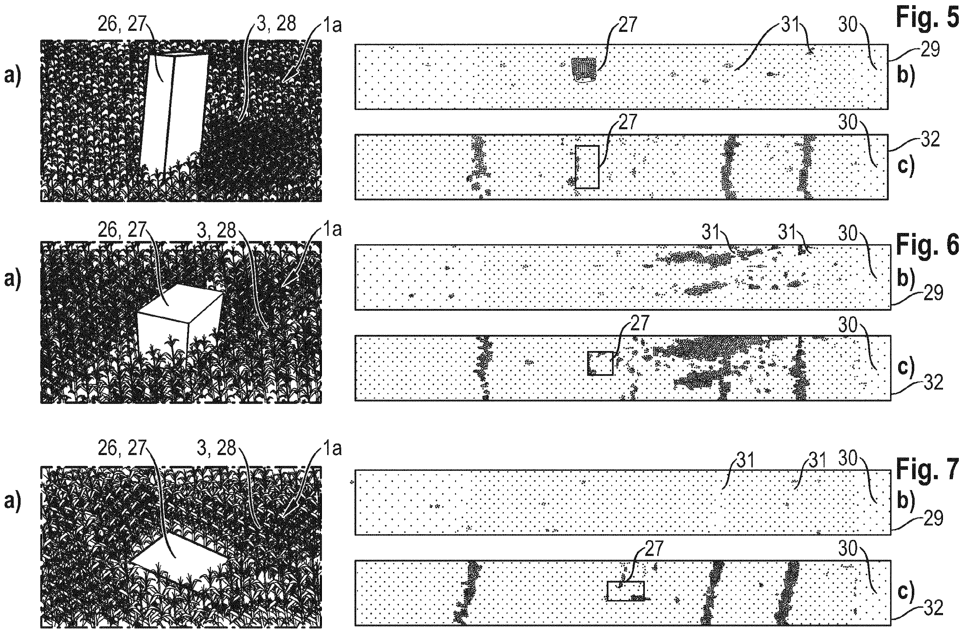

In Fig. 5a) ist schematisch und exemplarisch eine Ansicht einer zu bearbeitenden Fläche 34 mit einem darauf befindlichen soliden Objekt 26 als nicht überfahrbares Hindernis 27 dargestellt, wobei das solide Objekt 26 die Bestandhöhe 23 der umgebenden Pflanzen 3 als weitere Objekte 28 auf der Fläche 34 in vertikaler Richtung überragt. Fig. 5b) zeigt schematisch eine korrespondierende Punktwolke 29 der Fläche 34 gemäß Fig. 5a, auf der vorhandene Objekte 26, 28 basierend auf einer Distanzmessung detektiert und klassifiziert wurden. Fig. 5c) zeigt schematisch eine korrespondierende Punktwolke 29 der Fläche 34 gemäß Fig. 5a, auf der vorhandene Objekte 26, 28 basierend auf der Pulsweite 15 und/oder der Pulsform 25 der Echopulse 11 der vorhandenen Objekte 26, 28 detektiert und klassifiziert wurden.

In Fig. 6a) ist schematisch und exemplarisch eine Ansicht der zu bearbeitenden Fläche 34 mit einem darauf befindlichen soliden Objekt 26 als nicht überfahrbares Hindernis 27 dargestellt, welches bis an die Bestandhöhe 23 der umgebenden Pflanzen 3 heranragt. In Fig. 6b) ist die korrespondierende Punktwolke 29 der Fläche 34, auf der die vorhandenen Objekte 26, 28, das Hindernis 27 sowie die Pflanzen 3, basierend auf der Distanzmessung detektiert und klassifiziert wurden. Fig. 6c) zeigt schematisch die korrespondierende Punktwolke 29 der Fläche 34, auf der die vorhandenen Objekte 26, 28 basierend auf der Pulsweite 15 und/oder der Pulsform 25 der Echopulse 11 der vorhandenen Objekte 26, 28 detektiert und klassifiziert wurden. Während aus der Punktwolke 29 gemäß der Fig. 6b) zwischen dem Hindernis 27 als solidem Objekt 26 und dem umgebenden Pflanzen 3 nicht unterschieden werden kann, zeichnet sich bei der Auswertung der zeitlichen Signalform der Echopulse 11 der Objekte 26, 28 das solide Objekt 26 gegenüber den umgebenden Objekten 28 höherer Permeabilität anhand der höheren Pulsweite 15 und /oder abweichenden Pulsform 25 ab, wie in Fig. 6c) dargestellt.

In Fig. 7 a) ist schematisch und exemplarisch eine Ansicht der zu bearbeitenden Fläche 34 mit einem darauf befindlichen soliden Objekt 26 als nicht überfahrbares Hindernis 27 dargestellt, welches sich signifikant unterhalb der Bestandhöhe 23 der umgebenden Pflanzen 3 befindet. Ein solches, von der Arbeitsmaschine 1 oder einem daran angeordneten Anbaugerät nicht beschädigungsfrei überfahrbares, solides Objekt 26 wird basierend auf der Distanzmessung nicht detektiert. Fig. 7b) zeigt die korrespondierende Punktwolke 29 der Fläche 34 gemäß Fig. 7a, auf der vorhandene Objekte 26, 28 basierend auf der Distanzmessung detektiert und klassifiziert wurden. Das Hindernis 27 respektive das solide Objekt 26 zeichnet sich nicht als solches aus, sondern ähnelt einem freien befahrbaren Abschnitt 30 wie einer Fahrspur 31 oder einem abgeernteten Bereich neben einer Bestandskante 24. Fig. 7c) zeigt eine Punktwolke der Fläche, auf der vorhandene Objekte basierend auf Pulsweite und/oder Pulsform detektiert und klassifiziert wurden. Im Gegensatz zu der in Fig. 7b) dargestellten Punktwolke 29 lassen sich aus der Punktwolke 32 das Vorhandensein und die Kontur des soliden Objektes 27 bestimmen.

Basierend auf der Klassifikation eines Objektes 27, 28 durch die Steuerungseinheit 6 wird zumindest eine Handlungsanweisung generiert, um den Betrieb der Arbeitsmaschine 1 zu beeinflussen.

Gemäß einer Weiterbildung kann zumindest eine zusätzliche, von einer Ausführung als Laserscanner 33 abweichende, optische Sensoranordnung zur Klassifikation eines Objektes 27, 28 verwendet werden. Eine Einbeziehung einer zusätzlichen optischen Sensoranordnung, die nicht als Laserscanner ausgeführt ist, kann zu einer weiteren Verbesserung des Analysevorgangs bei der Klassifikation beitragen. Beispielsweise kann eine Kamera als optische Sensoranordnung vorgesehen sein, welche Bilder im sichtbaren Spektralbereich generiert. Alternativ kann eine Kamera als optische Sensoranordnung vorgesehen sein, welche Bilder im Nahinfrarotbereich generiert.

Gemäß einer Weiterbildung kann die Analyse des jeweiligen resultierenden Echopulses 11 auf räumliche Bereiche der durch die landwirtschaftliche Arbeitsmaschine 1 zu bearbeitende Fläche 34 begrenzt werden, in denen anhand einer von dem Laserscanner 33 erzeugten Punktwolke 28, 32 ein als von Pflanzenmaterial abweichendes solides Objekt 27 identifiziert wurde. Hierdurch lässt sich die Performanz des Verfahrens optimieren. Weiterhin lassen sich dadurch der erforderliche Speicherbedarf sowie die erforderliche Rechenleistung der Steuerungseinheit 6 reduzieren.

Der Laserscanner 33 kann als ein Solid-State LiDAR, ein Geiger-mode Lidar, ein Scanning LiDAR oder ein Single Photon LiDAR ausgeführt sein. Zur Auswertung und Klassifizierung werden unterschiedliche in den LiDAR-Sensor-Signalen enthaltene Informationen herangezogen. So kann für die Klassifizierung von geometrischen Umfeld- und Objekteigenschaften die von dem Laserscanner 33 erzeugte Punktwolke 28, 32 ausgewertet werden. Die Auswertung der Amplitude bzw. Intensität des resultierenden Echopulses 11 und/oder der Teilechopulse 11a, 11b kann eine Bestimmung der Oberflächenfarbe und/oder einer Oberflächenrauheit eines Objekts 26, 28 ermöglichen. Das Detektieren von Oberflächen- und/oder Objekt- und/oder Umfeldstrukturen kann durch das Umgebungslicht (ambient light) beeinflusst werden. Somit kann bei der Auswertung der LiDAR-Sensor-Signale der Einfluss des Umgebungslichts (ambient light) berücksichtigt werden, um Verfälschungen beim Klassifizieren der Oberflächen- und/oder Objekt- und/oder Umfeldstrukturen zu vermeiden. Die Eindringtiefe bzw. Eindringdichte kann anhand der Pulsweite 15 ausgewertet werden. Die Auswertung der zeitlichen Signalform bzw. Wellenform des resultierenden Echopulses 11 und/oder der Teilechopulse 11a, 11b kann zur Bestimmung der Oberflächen- und/oder inneren Objektstruktur verwendet werden. Die Auswertung der Wellenlänge des ausgesendeten Sendepulses 8 kann zur Bestimmung einer Oberflächenfarbe und/oder einer Oberflächenrauheit und/oder Zusammensetzung eines Objekts 26, 28 verwendet werden. Die vorstehend aufgeführten in den LiDAR-Sensor-Signalen enthaltenen unterschiedlichen Informationen können teilweise mit dem gleichen Ziel, bspw. dem Bestimmen der Oberflächenstruktur, Oberflächenfarbe oder Oberflächenrauheit, ausgewertet werden.

**Bezugszeichenliste**

| | | | |
|---|---|---|---|
| 1 | Arbeitsmaschine | 26 | Solides Objekt |
| 2 | Feldbestand | 27 | Hindernis |
| 3 | Pflanze | 28 | Objekt hoher Permeabilität |
| 3a | Vordere Pflanze | 29 | Punktwolke |
| 3b | Hintere Pflanze | 30 | Befahrbarer Abschnitt |
| 4 | Feldboden | 31 | Fahrspur |
| 5 | Fahrtrichtung | 32 | Punktwolke |
| 6 | Steuerungseinheit | 33 | Laserscanner |
| 7 | Sensoranordnung | 34 | Fläche |
| 8 | Sendepuls | M | Messfleck vorne |
| 9 | Sendestrahl | M' | Messfleck hinten |
| 10 | Senderichtung | | |
| 11 | Echopuls | | |
| 11a | Teilechopuls | | |
| 11b | Teilechopuls | | |
| 12 | Teilstrahl | | |
| 13 | Teilstrahl | | |
| 14 | Ähre | | |
| 14a | Vordere Ähre | | |
| 14b | Hintere Ähre | | |
| 15 | Pulsweite | | |
| 15a | Pulsweite | | |
| 15b | Pulsweite | | |
| 16 | Erste ansteigende Pulsflanke | | |
| 17 | Letzte abfallende Pulsflanke | | |
| 18 | Normierungsweite | | |
| 19 | Breitenerstreckung | | |
| 20 | Durchmesser | | |
| 21 | Ausgenommener Bereich | | |
| 22 | Abstandswert | | |
| 23 | Bestandshöhe | | |
| 24 | Bestandskante | | |
| 25 | Pulsform | | |

## Patentansprüche

1. Verfahren zur Identifikation von Objekten (26, 28) auf einer von einer landwirtschaftlichen Arbeitsmaschine (1) zu bearbeitenden Fläche (34), wobei die Arbeitsmaschine (1) eine Sensoranordnung (7) umfasst, durch die periodisch Sendepulse (8) aus elektromagnetischen Sendestrahlen (9) in mindestens einer Senderichtung (10) auf die zu bearbeitende Fläche (34) ausgesendet werden, wobei die Sendepulse (8) an den Objekten (26, 28) reflektiert und als Echopulse (11) von der Sensoranordnung (7) empfangen und an eine Steuerungseinheit (6) der Arbeitsmaschine (1) zur Auswertung übertragen werden, wobei für zumindest einen Teil der von der als Laserscanner (33) ausgeführten Sensoranordnung (7) ausgesendeten Sendepulse (8) unterschiedliche Teilstrahlen (12, 13) ein und desselben Sendestrahls (9) von in der jeweiligen Senderichtung (10) auf der Fläche (34) befindlichen Objekten (26, 28) zueinander zeitversetzt reflektiert werden, so dass sich der jeweils resultierende Echopuls (11) aus entsprechend zeitversetzten Teil-Echopulsen (11 a, 11b) zusammensetzt, **dadurch gekennzeichnet, dass** mittels der Steuerungseinheit (6) basierend auf einer Pulsweite (15a, 15b) innerhalb des resultierenden Echopulses (11) und/oder einer Pulsform (25) des resultierenden Echopulses (11) zwischen Objekten (28) hoher Permeabilität, insbesondere Pflanzenmaterial, und soliden Objekten (26) unterschieden wird.

2. Verfahren nach Anspruch 1, **dadurch gekennzeichnet, dass** aus der Laufzeit eines Sendepulses (8) bis zum Empfang des jeweiligen resultierenden Echopulses (11) ein Abstandwert (22) zum detektierten Objekt (26, 28) ermittelt wird.

3. Verfahren nach Anspruch 1 oder 2, **dadurch gekennzeichnet, dass** die Reflexionsintensität des jeweiligen resultierenden Echopulses (11), die Wellenlänge und/oder Umgebungslichtverhältnisse bestimmt werden.

4. Verfahren nach einem der Ansprüche 1 bis 3, **dadurch gekennzeichnet, dass** basierend auf der Pulsweite (15a, 15b) und/oder der Pulsform (25) detektierte solide Objekte (26) identifiziert und klassifiziert werden.

5. Verfahren nach Anspruch 4, **dadurch gekennzeichnet, dass** zur Klassifizierung die aus dem resultierenden Echopuls (11) bestimmte Pulsweite (15a, 15b) und/oder Pulsform (25) mit für die zu detektierenden Objekte (26, 28) bekannten Funktionen für Referenz-Pulsweiten und/oder Referenz-Pulsformen von Objekten verglichen werden.

6. Verfahren nach einem der vorangehenden Ansprüche, **dadurch gekennzeichnet, dass** basierend auf der Pulsweite (15a, 15b) und/oder der Pulsform (25) des resultierenden Echopulses (1) solide Objekte (27) erkannt werden, die sich auf Höhe einer Bestandshöhe (23) eines Feldbestands (2) oder niedriger befinden.

7. Verfahren nach einem der Ansprüche 2 bis 6, **dadurch gekennzeichnet, dass** aus den Abstandswerten (22) der als Pflanzenmaterial bestimmten Objekte (28) die Bestandshöhe (23) des Feldbestands (2) bestimmt wird.

8. Verfahren nach einem der vorangehenden Ansprüche, **dadurch gekennzeichnet, dass** basierend auf der Pulsweite (15a, 15b) und/oder der Pulsform (25) des resultierenden Echopulses (11) das Auftreten einer Staubwolke auf der zu bearbeitenden Fläche (34) als ein von einem soliden Objekt (26) abweichendes Objekt (28) identifiziert und klassifiziert wird.

9. Verfahren nach einem der Ansprüche 4 bis 8, **dadurch gekennzeichnet, dass** basierend auf der Klassifikation eines Objektes (26, 28) zumindest eine Handlungsanweisung durch die Steuerungseinheit (6) generiert wird, um den Betrieb der Arbeitsmaschine (1) zu beeinflussen.

10. Verfahren nach einem der vorangehenden Ansprüche, **dadurch gekennzeichnet, dass** zumindest eine zusätzliche, von einem Laserscanner (33) abweichende, optische Sensoranordnung zur Klassifikation eines Objektes (26, 28) verwendet wird.

11. Verfahren nach einem der vorangehenden Ansprüche, **dadurch gekennzeichnet, dass** zur Analyse des jeweiligen resultierenden Echopulses (11) statistische oder adaptive Schwellwertverfahren oder nicht-analytische Verfahren verwendet werden.

12. Verfahren nach einem der vorangehenden Ansprüche, **dadurch gekennzeichnet, dass** die Analyse des jeweiligen resultierenden Echopulses (11) auf räumliche Bereiche der Fläche (34) begrenzt wird, in denen anhand einer von dem Laserscanner (33) erzeugten Punktwolke (29, 32) ein als von Pflanzenmaterial abweichendes Objekt (27) identifiziert wurde.

13. Landwirtschaftliche Arbeitsmaschine (1), insbesondere selbstfahrende Erntemaschine oder Traktor, zur Durchführung eines Verfahrens nach einem der vorangehenden Ansprüche.

14. Landwirtschaftliche Arbeitsmaschine (1) nach Anspruch 13, **dadurch gekennzeichnet, dass** der Laserscanner (33) als ein Solid-State LiDAR, ein Geiger-mode Lidar, ein Scanning LiDAR oder ein Single Photon LiDAR ausgeführt ist.
